# EUROPEAN PATENT APPLICATION

(11) **EP 2 639 924 A2**
(43) Date of publication of application: **18.09.2013**
(21) Application number: 12162703.8
(22) Date of filing: 30.03.2012
(51) Int. Cl.: H02J 7/04

(54) **Charge control circuit**

(30) Priority: 13.03.2012 CN 201210065222
(71) Applicant: Hong Fu Jin Precision Industry (ShenZhen) Co., Ltd., Shenzhen City, Guangdong 518109 (CN); Hon Hai Precision Industry Co., Ltd., New Taipei City (TW)
(72) Inventor: Cheng, Hai-Long, Shenzhen City, Guangdong Province (CN); Wang, Tao, Shenzhen City, Guangdong Province (CN); Deng, Xue-Bing, Shenzhen City, Guangdong Province (CN)
(74) Representative: Gray, John James

(57) **Abstract**

A charge control circuit includes a resistance module, a voltage comparing module, and a charge control module. The resistance module includes a thermistor, and the resistance of the thermistor varies according to the temperature of a battery. The voltage comparing module is connected to the resistance module. The voltage comparing module compares the voltage of the thermistor with upper and lower voltage limits to determine whether the temperature of the battery is in the charge temperature range. If the voltage comparing module determines the voltage of the thermistor is outside the allowed range, the comparing module outputs a control signal to control the charge control module to stop charging the battery.

## Description

### BackGround

### Technical Field

The present disclosure relates to charge control circuits, and particularly, to a charge control circuit applied to charging a battery.

### Description of Related Art

In order to prevent a battery from being damaged during charging, the charge temperature of the battery is limited to a temperature range, typically 0°C-45°C. The battery should not be charged if the temperature of the battery is out of the temperature range. In order to detect the temperature of the battery, a thermistor whose resistance value varies with temperature of the battery is employed. The change of resistance of the thermistor causes the voltage of the thermistor to change accordingly. An integrated chip can detect the corresponding voltage of the thermistor to determine whether the temperature of the battery is out of the temperature range. However, the integrated chip is not dedicated to the function, and integrates so many functions that the temperature of the battery may not be detected accurately enough.

### BRIEF DESCRIPTION OF THE DRAWINGS

Many aspects of the present disclosure should be better understood with reference to the following drawings. The units in the drawings are not necessarily drawn to scale, the emphasis instead being placed upon clearly illustrating the principles of the present disclosure. Moreover, in the drawings, like reference numerals designate corresponding portions throughout the several views.

FIG. 1 is a block diagram of a charge control circuit in accordance with an exemplary embodiment.

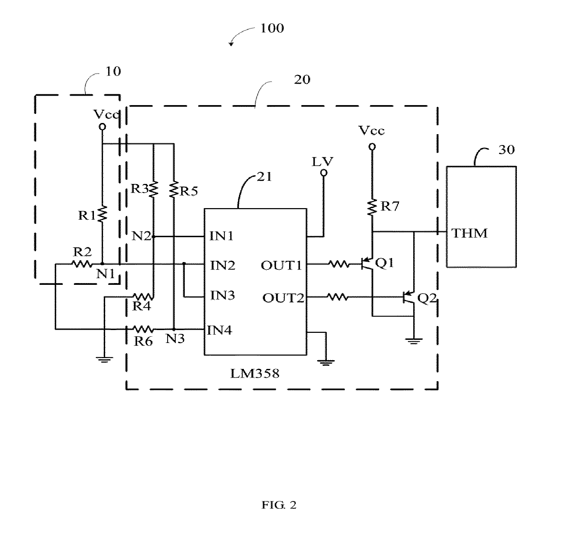

FIG. 2 is a circuit diagram of the charge control circuit of FIG. 1.

### DETAILED DESCRIPTION

Embodiments of the present disclosure will be described with reference to the drawings.

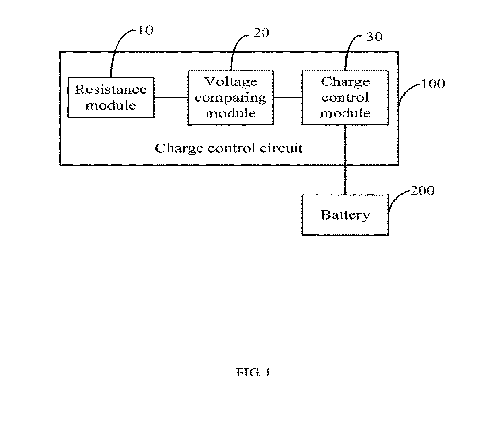

Referring to FIG. 1, a charge control circuit 100 is used to stop charging a battery 200 if the temperature of the battery 200 is out of the charge temperature range of the battery 200. In this embodiment, the charge temperature range is 0-45°C. The charge control circuit 100 includes a resistance module 10, a voltage comparing module 20, and a charge control module 30. The charge control module 30 is electrically connected to the battery 200.

The resistance module 10 is connected to a power supply Vcc, and comprises a first resistor R1, and a thermistor R2 whose resistance varies with the temperature of the battery being charged. In this embodiment, the resistance value of the thermistor R2 decreases with any increase of the temperature of the battery 200. The first resistor R1 and the thermistor R2 are serially connected between the power supply Vcc and the ground. A connection node N1 is formed between the first resistor R1 and the thermistor R2. In this embodiment, the power supply Vcc is configured to provide an external voltage to the circuit 100.

The voltage comparing module 20 includes a voltage comparing chip 21, a third resistor R3, a forth resistor R4, a fifth resistor R5, a sixth resistor R6, a seventh resistor R7, a first transistor Q1, and a second transistor Q2. The voltage comparing chip 21 includes a first input pin IN1, a second input pin IN2, a third input pin IN3, a forth input pin IN4, a first output pin OUT1, and a second output pin OUT2. The second input pin IN 2 and the third input pin IN3 are both connected to the first connection node N1. The input voltage of the second input pin IN2 and the third input pin IN3 are both equal to the voltage of the thermistor R2. The third resistor R3 and the forth resistor R4 are serially connected between the power supply Vcc and the ground, and a second connection node N2 is formed between the third resistor R3 and the forth resistor R4. The second connection node N2 is connected to the first input pin IN1, and the input voltage of the first input pin IN1 is equal to the voltage of the forth resistor R4. The fifth resistor R5 and the sixth resistor R6 are serially connected between the power supply Vcc and ground, and a third connection node N3 is formed between the fifth resistor R5 and the sixth resistor R6. The third connection node N3 is connected to the forth input pin IN4, and the input voltage of the forth input pin IN4 is equal to the voltage of the sixth resistor R6. The first output pin OUT1 is connected to the base terminal of the first transistor Q1, and the second output pin OUT2 is connected to the base terminal of the second transistor Q2. The emitter terminals of the first transistor Q1 and the second transistor Q2 are connected to the power supply Vcc via the seventh resistor R7. The collector terminals of the first transistor Q1 and the second transistor Q2 are connected to ground. The emitter terminal of the first transistor Q1 and the second transistor Q2 are also connected to an input pin THM of the charge control module 30.

In this embodiment, if the temperature of the battery 200 changes, the resistance of the thermistor R2 changes accordingly. The change of the resistance of the thermistor R2 causes a corresponding change in the input voltage at the second input pin IN2 and the third input pin IN3.

In this embodiment, the second connection node N2 provides an upper limit voltage to the first input pin IN1, and the upper limit voltage can be adjusted by adjusting the resistance value of the resistors R3 and R4. In this embodiment, the upper limit voltage corresponds to a minimum temperature within the charge temperature range 0-45°C. The charge control circuit 100 stops charging the battery 200 if the temperature of the battery 200 is less than the minimum temperature of the allowed range. The third connection node N3 provides a lower limit voltage to the forth input pin IN4, and the lower limit voltage can be adjusted by adjusting the resistance value of the resistors R5 and R6. The lower limit voltage corresponds to the maximum of the allowed charge temperature range. The charge control circuit 100 stops charging the battery 200 if the temperature of the battery 200 is equal to or more than the maximum temperature of the allowed range.

The voltage comparing chip 21 compares the input voltage of the second input pin IN2, which is equal to the voltage of the thermistor R2, with the upper limit voltage of the first input pin IN1, and compares the input voltage of the third input pin IN3 with the lower limit voltage of the forth input pin IN4, and can determine whether or not the voltage of the thermistor R2 is between the upper and lower voltage limits, and thus to determine whether the temperature of the battery 200 is within the charge temperature range.

If the voltage comparing chip 21 determines that the voltage of the thermistor R2 is equal to or greater than the upper limit, that is to say, the temperature of the battery 200 is lower than the allowed limit, the voltage comparing chip 21 controls the first output pin OUT1 to output a low-level voltage to the first transistor Q1, and the first transistor Q1 is thus conductive. In this embodiment, the actual voltage value of the low-level voltage may be 0V. Simultaneously, the comparing chip 21 controls the second output pin OUT2 to output a high-level voltage to the second transistor Q2, and the second transistor Q2 is cut off. In this embodiment, the actual voltage value of the high-level voltage may be 1V. The input pin THM of the charge control module 30 receives a first voltage as a control signal from ground via the conductive transistor Q1. In this embodiment, the voltage value of the first voltage received from the ground is 0V. The charge control module 30 stops charging the battery according to the control signal. In this embodiment, the charge control module 30 takes the first voltage as the control signal to stop charging the battery 20.

If the voltage of the thermistor R2 is determined to be lower than the allowed lower limit, the voltage comparing chip 21 controls the first output pin OUT1 to output a high-level voltage to the first transistor Q1, and the first transistor Q1 is cut off. Simultaneously, the comparing chip 21 controls the second out put pin OUT2 to output a low-level voltage to the second transistor Q2 to conduct the second transistor Q2. The input pin THM of the charge control module 30 receives the first voltage as a control signal from ground via the conductive transistor Q2. The charge control module 30 stops charging the battery according to the control signal.

If the voltage at the thermistor R2 is between the upper and lower limits of the allowed voltage range, that is to say, the temperature of the battery 200 is within the charge temperature range, the voltage comparing chip 21 controls the first output pin OUT1 and the second output pin OUT2 to both output a high-level voltage, and the two transistors Q1 and Q2 are both cut off. The input pin THM of the charge control module 30 receives a second voltage from the power supply Vcc via the seventh resistor R7. The charge control module 30 continues to charge the battery 200. In this embodiment, the voltage comparing chip 21 is an LM358 chip.

In an alternative embodiment, the voltage comparing module 20 is an intelligent chip which stores the upper and lower voltage limits. The intelligent chip includes an input/output interface (not shown) to obtain the voltage of the thermistor R2. The intelligent chip compares the voltage of the thermistor R2 with the upper and lower voltage limits to determine whether the temperature of the battery 200 is in the charge temperature range. If the intelligent chip determines that the voltage of the thermistor R2 is outside of the charge temperature range, the intelligent chip outputs a control signal from the input/output interface to the charge control module 30. The charge control module 30 stops charging the battery 20 according to the control signal. In this embodiment, the control signal may be a pulse signal.

It is believed that the present embodiments and their advantages will be understood from the foregoing description, and it will be apparent that various changes may be made thereto without departing from the spirit and scope of the disclosure or sacrificing all of its material advantages, the examples hereinbefore described merely being exemplary embodiments of the present disclosure.

## Claims

1. A charge control circuit for battery charging, comprising:
a resistance module, wherein the resistance module is connected to a power supply, and comprises a first resistance and a thermistor, the resistance of the thermistor varies with a temperature of a battery being charged, the power supply provides an external voltage to the charge control circuit;
a voltage comparing module connected to the resistance module, wherein the voltage comparing module compares the voltage of the thermistor with an upper limit voltage and a lower limit voltage to determine whether the temperature of the battery is in a charge temperature range, and wherein the upper limit voltage corresponds to one of a lower limit charge temperature or a upper limit charge temperature of the battery, and the lower limit voltage corresponds to another one of the lower limit charge temperature or the upper limit charge temperature of the battery; if the voltage comparing module determines the voltage of the thermistor is out of the range between the upper limit voltage and the lower limit voltage, that is to say, the temperature of the battery is out of the temperature range, the comparing module outputs a control signal; and
a charge control module, wherein the charge control module stops charging the battery according to the control signal.

2. The charge control circuit as described in claim 1, wherein a first connection node is formed between the first resistor and the thermistor, the voltage comparing module comprises a voltage comparing chip, a third resistor, a forth resistor, a fifth resistor, a sixth resistor, a seventh resistor, a first transistor, and a second transistor, the voltage comparing chip comprises a first input pin, a second input pin, a third input pin, a forth input pin, a first output pin, and a second output pin, the second input pin and the third input pin are both connected to the first connection node, the third resistor and the forth resistor are serially connected between the power supply and ground, and a second connection node is formed between the third resistor and the forth resistor, the second connection node is connected to the first input pin; the fifth resistor and the sixth resistor are serially connected between the power supply and ground, and a third connection node is formed between the fifth resistor and the sixth resistor, the third connection node is connected to the forth input pin, the first output pin is connected to the base terminal of the first transistor, and the second output pin is connected to the base terminal of the second transistor, the emitter terminal of the first transistor and the second transistor are both connected to the power supply via the seventh resistor, the collector terminal of the first transistor and the second transistor are both connected to the ground, the emitter terminal of the first transistor and the second transistor are also connected to an input pin of the charge control module.

3. The charge control circuit as described in claim 2, wherein the resistance of the thermistor decreases with any increase of the temperature of the battery.

4. The charge control circuit as described in claim 3, wherein the second connection node provides the upper limit voltage to the first input pin, and the upper limit voltage can be adjusted by adjusting the resistance value of the third resistor and the forth resistor, the upper limit voltage corresponds to the minimum temperature of the charge temperature range, the charge control circuit stops charging the battery if the temperature of the battery is less than the lower limit temperature; the third connection node provides the lower limit voltage to the forth input pin, and the lower limit can be adjusted by adjusting the resistance value of the fifth resistor and the sixth resistor, the lower limit voltage corresponds to the maximum temperature of the charge temperature range, the charge control circuit stops charging the battery if the temperature of the battery is equal to or greater than the upper limit temperature.

5. The charge control circuit as described in claim 4, wherein the voltage comparing chip compares the input voltage of the second input pin, which is equal to the voltage of the thermistor, with the upper limit voltage of the first input pin, and compares the input voltage of the third input pin with the lower limit voltage of the forth input pin, and determines whether the voltage value of the thermistor is between the upper limit voltage value and the lower limit voltage value to determine whether the temperature of the battery is within the charge temperature range.

6. The charge control circuit as described in claim 5, wherein if the voltage comparing chip determines the voltage value of the thermistor is equal to or greater than the upper limit voltage, which means the temperature of the battery is lower than the lower limit temperature, the voltage comparing chip controls the first output pin to output a low-level voltage to the first transistor, and the first transistor is conductive, simultaneously, the voltage comparing chip controls the second out put pin to output a high-level voltage to the second transistor, and the second transistor is cut off, the input pin of the charge control module receives a first voltage as a control signal from ground via the conductive transistor, and the charge control module stops charging the battery according to the control signal; if the voltage comparing chip determines the voltage value of the thermistor is lower than the lower limit voltage, the voltage comparing chip controls the first output pin to output a high-level voltage to the first transistor, and the first transistor is cut off, simultaneously, the comparing chip controls the second output pin to output a low-level voltage to the second transistor, and the second transistor is conductive, the input pin of the charge control module receives the first voltage as a control signal from ground via the conductive transistor, the charge control module stops charging the battery according to the control signal.

7. The charge control circuit as described in claim 5, wherein if the voltage comparing chip determines the voltage value of the thermistor is between in the upper limit voltage value and the lower limit voltage, that is to say, the temperature of the battery is in the charge temperature range, the voltage comparing chip controls the first output pin and the second output pin to output a high-level voltage simultaneously , and the two transistors are both cutoff, the input pin of the charge control module receives a second voltage from the power supply via the seventh resistor, the charge control module continues to charge the battery.

8. The charge control circuit as described in claim 5, wherein the voltage comparing chip is a LM358 chip.

9. The charge control circuit as described in claim 1, wherein the voltage comparing module is an intelligent chip which stores the upper limit voltage value and the lower limit voltage value, the intelligent chip includes an input/output interface to obtain the voltage value of the thermistor, the intelligent chip compares the voltage value of the thermistor with the upper limit voltage value and the lower limit voltage value to determine whether the temperature of the battery is in the charge temperature range, if the intelligent chip determines the voltage of the thermistor is out of the range between the upper limit voltage value and the lower limit voltage value, the intelligent chip outputs a control signal from the input/output interface to the charge control module, the charge control module stops charging the battery according to the control signal.

10. The charge control circuit as described in claim 9, wherein the control signal is a pulse signal.
